# EUROPÄISCHE PATENTSCHRIFT

(11) **EP 2 536 779 B1**
(45) Veröffentlichungstag und Bekanntmachung des Hinweises auf die Patenterteilung: **11.09.2013**
(21) Anmeldenummer: 11704775.3
(22) Anmeldetag: 18.02.2011
(51) Int. Cl.: C08G 77/50, F04B 43/00

(54) **VERFAHREN ZUR KONTINUIERLICHEN HYDROSILYLIERUNG**
Method for continuous hydrosilylation
Procédé d'hydrosilylation continue

(30) Priorität: 19.02.2010 EP 10001726
(43) Veröffentlichungstag der Anmeldung: 26.12.2012
(73) Patentinhaber: BYK-Chemie GmbH, 46483 Wesel (DE)
(72) Erfinder: ISSBERNER, Jörg, 47877 Willich-Neersen (DE); TLAUKA, Frank, 46147 Oberhausen (DE); BECKMANN, Tom, 46499 Hamminkeln (DE); BUBAT, Alfred, 46487 Wesel (DE)
(74) Vertreter: Leifert, Elmar
(86) Internationale Anmeldenummer: PCT/EP2011/052443
(87) Internationale Veröffentlichungsnummer: WO 2011/101441

(56) Entgegenhaltungen:
- DE-C1- 19 859 759

## Beschreibung

Die Erfindung betrifft ein Verfahren zur kontinuierlichen Hydrosilylierung von Kohlenstoff-Kohlenstoff-Mehrfachbindungen enthaltenden Verbindungen mit Wasserstoff-Silizium-Bindungen aufweisenden Verbindungen.

In der US 6350824 B ist die kontinuierliche Hydrosilylierung von Siloxanen beschrieben, bei der ein Gemisch der Edukte kontinuierlich durch einen Rohrreaktor geführt wird. Es können so kurze Verweilzeiten realisiert werden. Jedoch führt die ungenügende Energieabfuhr bei stark exothermen Reaktionen zu Nebenreaktionen, sogenannten "Hot Spots" ("lokalen Überhitzungen") in der Reaktionszone und schwieriger Reaktionskontrolle. So kann kein stabiler Prozess und keine stabile Produktqualität erreicht werden. Im Extremfall können derartige Temperaturbelastungen zur Zersetzung von Katalysatoren, Edukten oder Produkten führen und schließlich in einem sogenannten "Runaway" enden. Ein Runaway bezeichnet durchgehende Reaktionen, die auch durch Kühlung nicht mehr gestoppt werden können. Lokale Überhitzungen können üblicherweise nur durch Verdünnung mit Lösemitteln, Erniedrigung der Starttemperatur oder Verringerung der eingesetzten Katalysatormenge erreicht werden. Diese Maßnahmen sind zwar wirkungsvoll, verringern jedoch die Raum-Zeit-Ausbeute.

Die WO 03/014129 A1 beschreibt die kontinuierliche Hydrosilylierung mittels einer Mikroreaktionstechnik. Als Reaktoren werden Platten-Wärmeaustauscher insbesondere Rippenplatten-Wärmeaustauscher wie der in der WO 99/66280 A beschriebene verwendet. Edelmetallpartikel aus den eingesetzten Katalysatoren können die engen Reaktionsröhren des als Reaktor verwendeten Wärmetauschers verstopfen. Die Reaktion ist ferner durch Druckaufbau und Druckverlust bei Siloxanen, die eine höhere Viskosität aufweisen, schwer zu steuern. Auch sind die als Reaktoren eingesetzten Wärmeaustauscher nur bedingt für den Einsatz unmischbarer Reaktanten geeignet. Stoffdurchgangs-Beschränkungen können dabei die Gesamtverfahrensgeschwindigkeit signifikant reduzieren. So empfiehlt die WO 03/014129 A1 für solche Fälle die Vorschaltung einer dynamischen oder statischen Mischvorrichtung vor Eintritt in den Reaktor und/oder die Mischung der Reaktanten mit üblicherweise statischen Mischelementen, die in den Reaktor eingeführt sind.

In der WO 2008/017555 A1 wird eine Anlage und ein Verfahren zur kontinuierlichen industriellen Herstellung von monomeren Organosilanen beschrieben, das von mikrostrukturierten Wärmeaustauschern Gebrauch macht. Eingesetzt wird insbesondere eine Kombination aus einem T-Mischer, einem Vorreaktor aus Edelstahl (Durchmesser 5 bis 10 mm, Länge 40 bis 50 mm) und einem Rohrbündelwärmeaustauschreaktor sowie parallelgeschalteten Edelstahlkapillaren oder einer Edelstahlkapillare.

Die WO 2008/017552 A1 betrifft ein Verfahren zur kontinuierlichen industriellen Fertigung von monomeren Polyetheralkylalkoxysilanen. Zur Durchführung des Verfahrens wird eine Kombination aus einem T-Mischer, mehreren parallel geschalteten auswechselbaren und mit Füllkörpern bestückten Vorreaktoren aus Edelstahl und integrierten Blockreaktoren aus Edelstahl offenbart.

Sowohl in der WO 2008/017555 A1 als auch in der WO 2008/017552 A1 werden somit statische Mischverfahren und röhrenförmigen Multielementreaktoren zur Herstellung relativ niedermolekularer monomerer Silane eingesetzt. Hierbei sind die Verweilzeiten in den Multielementreaktoren relativ lang und die Durchmischung der Edukte ist nicht optimal, was zu den oben angegebenen Problemen hinsichtlich der Produktqualität führen kann.

Die kontinuierliche Hydrosilylierung von Hydrogensilanen mit Olefinen in Loopreaktoren ist beispielsweise bereits in der DE 2851456 C2 beschrieben. Die Umsetzung verläuft unter guter Vermischung und Wärmeabfuhr. Jedoch müssen unvollständige Reaktion, Nebenreaktionen der Edukte und eine Rückvermischung der Produkte mit den Edukten in Kauf genommen werden.

In der US 6291622 B ist eine Kombination aus einem Loop-Vorreaktor und einem nachgeschalteten Rohrreaktor beschrieben. Durch zwei getrennte Anlagenteile entsteht ein großer Regelaufwand mit höheren Investitions- und Betriebskosten. Feste Eduktverhältnisse sind vorgegeben, da eine einstufige Reaktion stattfindet. Es sind große Mengen an reaktiven Edukten im Reaktionssystem, deshalb muss ein großer Aufwand an Sicherheitsvorkehrungen bereitgestellt werden.

Auch die EP 1 669 363 A1 betrifft ein Verfahren zur kontinuierlichen Hydrosilylierung, wobei jedoch ein integrierter Loop-Rohrreaktor zum Einsatz kommt. Dabei wird das Reaktionsgemisch aus dem Rohr in den Loop und wieder zurück geleitet, so dass ein Rohrabschnitt Teil des Loop-Umlaufes ist. Hierbei soll insbesondere der Nachteil des Loop-Vorreaktors der US 6291622 B vermieden werden. Nachteilig beim Verfahren der EP 1 669 363 A1 ist jedoch, dass eine Durchmischung der Edukte in einer Vormischkammer mittels geeigneter Mischeinrichtungen wie Rührern oder Ultraschall zu erfolgen hat, wobei die Temperatur vorzugsweise 10 bis 35 °C beträgt. Im Reaktionsrohr erfolgt die Durchmischung mittels statischer Mischer oder durch aktive Mischung mittels parallel zur Längsachse des Reaktionsrohrs laufender Rührwerkzeuge. Auch wird der Einsatz fest eingebauter oder wechselbarer Trombenstörer an der Wandung des Reaktorrohrs offenbart oder es wird eine Durchmischung mittels Füllkörpern, beispielsweise Glaskugeln, Keramik- oder Glashohlkörpern oder Metallspänen versucht. Im Loop selbst wird eine Durchmischung mittels statischer Mischer oder durch aktive Mischung wie oben erwähnt erreicht. Es muss somit in der Vorreaktionskammer, dem Rohrreaktor und dem Loop, das heißt in räumlicher Trennung eine Vermischung mittels der oben genannten Mischeinrichtungen erfolgen. Die eingesetzten Mischeinrichtungen führen insbesondere beim Einsatz höherviskoser Edukte und/oder schlecht homogen miteinander mischbarer Edukte zu unzureichender Durchmischung und zu uneinheitlichen Produkten. Die Viskosität des Reaktionsgemischs sollte daher gemäß der EP 1 669 363 A1 vorzugsweise 10000 mPas (bei 25 °C) nicht überschreiten.

Wie oben erwähnt ist es besonders wichtig qualitativ besonders hochwertige Produkte zu erhalten, die weitgehend frei von unerwünschten Nebenprodukten sind. Dies ist insbesondere bei der Herstellung solcher modifizierter Organopolysiloxane wichtig, die als Additive in verunreinigungsempfindlichen Systemen wie beispielsweise Automobillacken oder anderen hochwertigen Beschichtungen oder thermoplastischen oder duroplastischen Formkörpern eingesetzt werden sollen. Bereits geringe Verunreinigungen, die beispielsweise als Nebenprodukte bei der Herstellung der modifizierten Organopolysiloxane entstehen, können in diesen Anwendungsbereichen zu Oberflächenstörungen führen. Gerade die modifizierten Organopolysiloxane werden häufig als Mittel zur Verbesserung der Kratzfestigkeit, als Gleitmittel, Entschäumer oder Schaumstabilisatoren, Verlaufmittel, oberflächenaktive, wasserabweisende oder schmutzabweisende Mittel wie beispielsweise Antigraffiti-Mittel, Trennmittel oder Benetzungsmittel in obigen Anwendungsbereichen eingesetzt. Sie können beispielsweise aber auch der Modifizierung von Polymeren beziehungsweise Harzen oder zur Behandlung von Pigmenten oder Füllstoffen eingesetzt werden.

Aufgabe der vorliegenden Erfindung war es ein Verfahren zur kontinuierlichen Herstellung von Organosilicium-Verbindungen wie Silanen, aber insbesondere auch (modifizierten) Organopolysiloxanen bereitzustellen, welches die Nachteile des Stands der Technik nicht aufweist. Insbesondere sollten lokale Überhitzungen vermieden werden, um die geforderten möglichst hohen Produktqualität zu gewährleisten und durchgehende Reaktionen zu vermeiden. Dabei sollte trotzdem eine hohe Raum-Zeit-Ausbeute erreicht werden.

Mischtechniken, die es erforderlich machen in mehreren Reaktorabschnitten oder miteinander kombinierten Reaktoren mehrere aktive Mischeinrichtungen zu implementieren, sollten insbesondere aus Wartungs- und Wirtschaftlichkeitsgründen vermieden werden. Trotzdem sollte das Verfahren gewährleisten, dass nicht nur ineinander lösliche, niedermolekulare oder niederviskose Edukte einsetzbar sind. Vielmehr sollten auch dann Produkte in hoher Qualität und guter Ausbeute erhältlich sein, wenn diese aus hochviskosen Edukten erhalten werden oder Edukten, die ineinander schlecht löslich sind, ohne dass größere Mengen Lösemittel zum Einsatz kommen müssen.

Das Verfahren soll zudem eine rasche und exakte Einstellung der Reaktionsbedingungen ermöglichen, um bei verkürzter Reaktionszeit trotzdem verbesserte oder zumindest im wesentlichen gleiche Selektivitäten und Ausbeuten zu erhalten, als dies mit den Verfahren des Stands der Technik möglich ist. Es sollte durch die verkürzten Reaktionszeiten des bereitzustellenden Verfahrens auch die Möglichkeit eröffnet werden die Reaktionen bei deutlich höheren Temperaturen durchzuführen als dies bei diskontinuierlichen Verfahren aufgrund der langen Reaktorverweilzeiten möglich ist. Auch sollte die Möglichkeit bestehen gasförmige mit flüssigen Edukten zur Reaktion zu bringen. Insbesondere sollte das Verfahren auch eine sichere Herstellung der Zielprodukte ermöglichen.

Eine weitere Aufgabe bestand darin ein Hydrosilylierungsverfahren zur Verfügung zu stellen, welches mit einem minimalen Einsatz an Katalysatormenge ohne Umsatzeinbußen auskommt und somit eine besonders kostengünstige Synthesemöglichkeit bereitstellt, die zudem zu weniger farbintensiven Produkten führt.

Die oben genannten sowie die darüber hinaus in der folgenden Beschreibung angesprochenen Aufgaben und Probleme konnten durch Zurverfügungstellung eines Verfahrens zur kontinuierlichen Herstellung von Silanen und/oder Organopolysiloxanen durch Hydrosilylierung gelöst werden, bei welchem mindestens eine Verbindung (A), die mindestens eine Kohlenstoff-Kohlenstoff-Mehrfachbindung enthält mit mindestens einer Verbindung (B), die mindestens eine Si-H-Funktionalität aufweist zur Reaktion gebracht wird, wobei die Reaktion in einer Reaktionsmischpumpe erfolgt.

Reaktionsmischpumpen im Sinne dieser Erfindung sind vorzugsweise vom Peripheralradpumpen-Typ und sind ausgestattet mit
(a) einer rotationssymmetrischen Mischkammer aus einer Umfangswand und zwei Stirnseiten, die strömungstechnisch miteinander verbundene ringförmige Kanäle aufweisen,
(b) mindestens einer Einlassöffnung zur Mischkammer, worüber die Verbindung(en) (A) zugeführt werden,
(c) mindestens einer Einlassöffnung zur Mischkammer, worüber Verbindung(en) (B) zugeführt werden,
(d) einem magnetgekuppelt angetriebenen Mischrotor in der Mischkammer, der stirnseitig symmetrisch angeordnete Kantenbrüche aufweist, die mit den ringförmigen Kanälen an den Stirnseiten der Mischkammer Druckzellen bilden und wobei die Druckzellen über Durchgangsbohrungen im Mischrotor miteinander verbunden sind,
(e)einer Auslassöffnung der Mischkammer, worüber das Reaktionsgemisch und/oder das Produkt aus der Reaktionsmischpumpe ausgetragen werden, und
(f) einem durch ein externes Heiz- beziehungsweise Kühlaggregat temperierbaren Temperierkreislauf.

Eine derartige für das erfindungsgemäße Verfahren geeignete Rotationsmischpumpe wird beispielsweise in der DE-A-42 20 239 beschrieben, welche durch Zitieren in diese Anmeldungen aufgenommen wird. Hierin ist der Pumpenkopf über einen Temperierkreislauf durch ein externes Heiz- bzw. Kühlaggregat temperierbar. Die Peripherie besteht mindestens aus einer gegebenenfalls beheizbaren Dosiereinrichtung für jedes Edukt und einer nachgeschalteten gegebenenfalls beheizbaren Leitung für das Reaktionsgemisch.

Verschiedene weitere Ausführungen erfindungsgemäß einsetzbarer Reaktionsmischpumpen sind beispielsweise von der Firma K-ENGINEERING (Westoverledingen, Deutschland) unter der Bezeichnung "HMR" kommerziell erhältlich. Diese Vorrichtungen vereinigen in sich die Eigenschaften einer Peripheralrad-Pumpe, eines Mischers zur besonders effektiven Durchmischung sowie eines Reaktors. Hierdurch bedarf das erfindungsgemäße Verfahren eines sehr geringen apparativen Aufwandes. Die Mischkammer der erfindungsgemäß einsetzbaren Reaktionsmischpumpe(n) umfassen einen Lagerträger und ein zylindrisches Einsatzelement mit einer den Mischrotor übergreifenden Umfangswand. In der Umfangswand der Reaktionsmischpumpe befindet sich je mindestens eine Einlassöffnung für die Verbindungen (A) und Verbindungen (B), sowie eine Auslassöffnung für das Reaktionsgemisch.

Als besonders günstig hat es sich erwiesen, die Eintrittsöffnungen der Reaktionspumpen in Richtung auf die Reaktionsmischkammer düsenartig verjüngt zu gestalten, weil dadurch eine Art Saugeffekt entsteht.

Die Umdrehungsfrequenz des Rotors, welche zweckmäßigerweise über einen externen Frequenzumrichter gesteuert wird, beträgt bei der Durchführung des erfindungsgemäßen Verfahrens üblicherweise 50 bis 50000 Umdrehungen pro Minute.

Das Reaktionsvolumen in der Reaktionsmischpumpe beträgt üblicherweise 1 bis 1000 cm³, vorzugsweise 1 bis 100 cm³ und besonders bevorzugt 5 bis 100 cm³.

Selbstverständlich müssen die Teile der Reaktionsmischpumpe, die mit den Edukten, dem Reaktionsgemisch und dem Reaktionsprodukt in Berührung gelangen aus einem Material gefertigt oder damit verkleidet sein, welches sich inert gegenüber den Bestandteilen der Reaktionsmischung verhält. Solche Materialien sind beispielsweise Metalle bzw. Metallegierungen, wie Hastelloy, Titan oder Nickel, Kunststoffe, wie Polyethylen (PE), Polypropylen (PP), Polyvinylidenfluorid (PVDF) oder insbesondere Polytetrafluorethylen (PTFE), oder Oxidkeramik.

Die technische Auslegung der Reaktionspumpen erfolgt in der Regel entsprechend den gewünschten Druckverhältnissen in der Mischkammer.

Werden größere Menge des Zielprodukts gefordert, so können auch mehrere Reaktionsmischpumpen als Reaktionsmischpumpen-Aggregat parallelgeschaltet betrieben werden (im Sinne eines sogenannten "Numbering-Up"). Zu diesem Zweck wird die Reaktionsmischpumpe in einer Vorrichtung angeordnet, welche weitere jeweils unabhängig voneinander kontinuierlich betriebene Reaktionsmischpumpen enthält, in welchen die Verbindung(en) (A) mit der der oder den Verbindung(en) (B) umgesetzt werden, wobei die Reaktionsmischpumpen zeitgleich und unabhängig voneinander parallel betrieben werden können. Ein derartiger Parallelbetrieb gewährleistet nicht nur die Erzeugung von hohen Produktionsmengen, sondern auch eine hohe Flexibilität, da kurzfristig und mit verhältnismäßig geringem Aufwand eine derart betriebene defekte Reaktionsmischpumpe durch eine andere ersetzbar ist. Auch wird im Vergleich zu Batch-Verfahren eine größere Reaktorsicherheit gewährleistet, da bei technischen Problemen die Gefahr eines Austritts größerer Mengen an Edukt, Reaktionsgemisch und Produkt vermieden wird.

Die im erfindungsgemäßen Verfahren eingesetzten Reaktionsmischpumpen können darüber hinaus mit weiteren Anschlussmöglichkeiten für Heiz-, Kühl- und Spülkreisläufe ausgestattet sein.

Vorstehend beschriebene Reaktionsmischpumpen beschleunigen die Stoff- und Wärmetransportprozesse, wobei sich zusätzlich Anfangs- und Randbedingungen der Reaktion exakt einstellen lassen. Die Verweilzeiten sind besonders genau einstellbar, wobei das stark exotherme erfindungsgemäße Verfahren annähernd isotherm betrieben werden kann.

Typische Betriebsparameter der im erfindungsgemäßen Verfahren einsetzbaren Reaktionsmischpumpen sind deren Durchsatz von vorzugsweise 100 ml/h bis 1000 l/h, besonders bevorzugt 100 ml/h bis 10 l/h, die Temperatur in der Reaktionsmischpumpe von vorzugsweise -50 bis 300 °C, besonders bevorzugt 50 bis 250 °C, der Druck in der Reaktionsmischpumpe von vorzugsweise 0 bis 20 bar, besonders bevorzugt 0 bis 10 bar, die Umdrehungsgeschwindigkeit des Rotors von vorzugsweise 50 bis 50000 Umdrehungen pro Minute, besonders bevorzugt 500 bis 10000 Umdrehungen pro Minute, die Verweilzeit in der Reaktionsmischpumpe von vorzugsweise 0,1 Sekunde bis 30 min, vorzugsweise bis zu 10 min und besonders bevorzugt bis zu 1 min.

In einer besonderen Ausführungsform sind dem Reaktor weitere in kontinuierlicher Weise betriebene Reaktorsysteme nachgeschaltet, welche eine Nachdosierung der Verbindung(en) (A) und/oder der Verbindung(en) (B) und/oder eine Nachtemperierung zur Vervollständigung der Reaktion verwirklichen können. Die Nachreaktion in den nachgeschalteten Reaktorsystemen gewährleistet in einigen Fällen erst das Erreichen des gewünschten Umsatzes, welcher typischerweise bezogen auf die insgesamt umsetzbaren Si-H-Funktionen bei vorzugsweise mindestens 30 %, besonders bevorzugt mindestens 70 % und ganz besonders bevorzugt bei 95 % und höher liegt.

Im einfachsten und bevorzugtesten Fall ist ein Nachreaktor in Form eines Rohrs oder Schlauchs ausgebildet, jeweils aus gegenüber den Edukten, dem Reaktionsgemisch und den Produkten inertem Material. Werden derart einfache Nachreaktoren verwendet, bedarf es aufgrund der bereits hervorragenden Durchmischung in der Reaktionsmischpumpe üblicherweise keiner Verwendung weiterer Mischeinrichtungen im Nachreaktor. Typische Nachreaktionszeiten liegen von 0 bis 100 min, vorzugsweise 0 bis 50 min und besonders bevorzugt 5 bis 30 min.

In einer besonderen Ausführungsform können als nachgeschaltete Reaktoren auch Reaktionsmischpumpen eingesetzt werden, wie sie im erfindungsgemäßen Verfahren Einsatz finden. Der Produktstrom aus der im erfindungsgemäßen Verfahren eingesetzten Reaktionsmischpumpe ist dann einer der Eingangsbeziehungsweise Eduktströme für den nachgeschalteten Reaktor. So können beispielsweise reaktive funktionelle Gruppen im Produkt des erfindungsgemäßen Verfahrens im Nachreaktor mit anderen Verbindungen umgesetzt werden.

Die Umsetzungsprodukte aus Verbindung(en) (A) und Si-H-funktionellen Verbindung(en) (B) liegen in Form von Additionsverbindungen vor. Vorzugsweise werden in der Reaktionsmischpumpe 10 bis 100 Mol% der durch die Zufuhr der Si-H-funktionellen Verbindung(en) (B) in den Reaktor eingeführten Si-H-Funktionen im Reaktor umgesetzt. In manchen Ausführungsformen des Verfahrens kann es bevorzugt sein, dass beispielsweise nur 10 bis 50 Mol% oder 20 bis 50 Mol% der durch die Zufuhr der Si-H-funktionellen Verbindung(en) (B) in den Reaktor eingeführten Si-H-Funktionen im Reaktor umgesetzt werden. Dies gilt insbesondere dann, wenn wie oben beschrieben Nachreaktoren zum Einsatz kommen. In einigen Fällen läßt sich auf diese Weise auch die Verweilzeit in der Reaktionsmischpumpe minimieren, wenn nämlich durch die teilweise Bildung des Produkts eine Lösung oder Emulgierung der Edukte im Produkt (zusätzlich zur aktiven Vermischung durch die Pumpe) zur Homogenisierung der Reaktanten beiträgt. In allen Fällen wird jedoch ein Mindestanteil der in den Reaktor kontinuierlich eingeführten Si-H-funktionellen Verbindungen, hauptsächlich (oder gegebenenfalls auch ausschließlich) mit der oder den Verbindungen(en) (A) noch in der Reaktionsmischpumpe selbst reagieren. Diesbezüglich gewährleistet das erfindungsgemäße Verfahren dem Reaktionsgemisch im Reaktor eine genügend lange Verweilzeit. Zur Bestimmung des Umsetzungsgrades eignen sich alle gängigen optischen Analyseverfahren wie beispielsweise Raman-, IR- oder NIR-Spektroskopie insbesondere gekoppelt mit chromatographischen Verfahren wie Gelpermeationschromatographie oder HPLC. Insbesondere eignet sich die IR-spektroskopische Beobachtung des Verschwindens der Si-H-Bande.

Das erfindungsgemäße Verfahren gewährleistet die Herstellung von Additionsverbindungen, welche eine besonders einheitliche und hohe Qualität aufweisen. In diesem Zusammenhang ist zu erwähnen, dass das Verfahren aufgrund der kurzen Verweilzeiten insbesondere Equilibrierungsreaktionen unterdrückt. Auch wird überraschenderweise die Bildung von unerwünschten Umlagerungsprodukten terminal ungesättigter Verbindungen (A) - wie beispielsweise Allylverbindungen - in solche mit nicht-terminalen Mehrfachbindungen weitestgehend verhindert. Derartige unerwünschte Umlagerungsprodukte verleihen den Endprodukten zumeist einen unangenehmen Geruch, wodurch deren Verwertbarkeit eingeschränkt ist. Wesentlich ist auch, dass das erfindungsgemäße Verfahren verhältnismäßig leicht handhabbar ist, wodurch die zugrunde liegende stark exotherme Reaktion gut kontrollierbar ist. Insbesondere im Dauerbetrieb gewährleistet das erfindungsgemäße Verfahren eine hohe Wirtschaftlichkeit.

Über die Verbindung(en) (A) werden eigenschaftsmodifizierende Reste in die Si-H-funktionellen Verbindungen (B) eingebracht, die mit über den Einsatzzweck der Zielprodukte entscheiden.

Als Verbindung(en) (A) werden Verbindungen eingesetzt, die Kohlenstoff-Kohlenstoff-Mehrfachbindungen aufweisen. Geeignete Kohlenstoff-Kohlenstoff-Mehrfachbindungen sind C=C-Doppelbindungen und C≡C-Dreifachbindungen, wobei solche Verbindungen bevorzugt eingesetzt werden, die eine oder mehrere C=C-Doppelbindungen aufweisen. Die Kohlenstoff-Kohlenstoff-Mehrfachbindungen können in den Verbindungen (A) terminal oder an anderer Stelle in der Verbindung vorliegen, wobei terminale Kohlenstoff-Kohlenstoff-Mehrfachbindungen bevorzugt sind. Besonders bevorzugt sind Verbindungen (A), die terminale C=C-Doppelbindungen enthalten. Obgleich die Verbindungen (A) mehrere Kohlenstoff-Kohlenstoff-Mehrfachbindungen enthalten können, ist es bevorzugt, dass diese nur eine Kohlenstoff-Kohlenstoff-Mehrfachbindung, insbesondere genau eine C=C-Doppelbindung und besonders bevorzugt genau eine terminale C=C-Doppelbindung aufweisen. Keine Kohlenstoff-Kohlenstoff-Mehrfachbindungen im Sinne dieser Erfindung sind aromatische Kohlenstoff-Kohlenstoff-Bindungen. So liegt beispielsweise im Phenylethen (Styren) nur eine Kohlenstoff-Kohlenstoff-Mehrfachbindung im Sinne der Erfindung vor, nämlich die des Vinyl-Restes im Styren.

Vorzugsweise sind die in den Verbindungen (A) enthaltenen Kohlenstoff-Kohlenstoff-Mehrfachbindungen in funktionellen Gruppen enthalten, die gewählt sind aus der Gruppe bestehend aus Vinyl-Gruppen, Allyl-Gruppen und (Meth)acryl-Gruppen. Wie üblich umfasst auch hier die Schreibweise "(Meth)acryl" sowohl "Acryl" als auch "Methacryl". Die Verbindungen (A) sind dabei bevorzugt monovinylische, monoallylische oder mono(meth)acrylische Verbindungen, das heißt sie weisen bevorzugt nur eine der genannten Gruppen auf, wobei besonders bevorzugt keine weiteren Kohlenstoff-Kohlenstoff-Mehrfachbindungen enthaltenden funktionellen Gruppen in der Verbindung enthalten sind. Ganz besonders bevorzugt liegen die vorgenannten funktionellen Gruppen terminal in der Verbindung (A) vor.

Bevorzugt werden als Verbindung (A) solche der allgemeinen Formel (I) eingesetzt:

CH₂=CR¹-R²-R (I)

worin
der Rest R für einen geradkettigen oder verzweigten Alkylrest mit 1 bis 30 Kohlenstoffatomen, einen Arylrest mit 5 bis 12 Kohlenstoffatomen, einen Aralkylrest mit 6 bis 12 Kohlenstoffatomen, Halogen, Epoxy, eine NCO-, Carboxyl- oder Silyl-Gruppe oder für eine Gruppe X-R³ steht, worin X für O, S oder NR⁴ steht, worin R⁴ für Wasserstoff oder einen geradkettigen oder verzweigten Alkylrest mit 1 bis 30, vorzugsweise 1 bis 20, besonders bevorzugt 1 bis 6 Kohlenstoffatomen steht und R³ für Wasserstoff, einen geradkettigen oder verzweigten Alkylrest mit 1 bis 30 Kohlenstoffatomen, einen Arylrest mit 5 bis 12 Kohlenstoffatomen, einen Aralkylrest mit 6 bis 12 Kohlenstoffatomen oder einen Rest CO-R⁵, worin R⁵ für einen verzweigten oder unverzweigten Alkyl- oder Alkenyl-Rest mit 1 bis 30, vorzugsweise 1 bis 20, besonders bevorzugt 1 bis 6 Kohlenstoffatomen steht oder
worin der Rest R für einen polymeren Rest steht, gewählt aus der Gruppe bestehend aus einem Polyester-Rest, einem Polyether-Rest, einem Polyurethan-Rest, einem Polyester-Polyether-Rest, einem Polyurethan-Polyether-Rest oder einem Polyester-Polyurethan-Rest, wobei die polymeren Reste als terminale Gruppe eine Gruppe X-R³ tragen;
der Rest R¹ für Wasserstoff oder eine geradkettige oder verzweigte Alkylgruppe mit 1 bis 4 Kohlenstoffatomen, vorzugsweise für Wasserstoff, Methyl oder Ethyl, besonders bevorzugt für Wasserstoff oder Methyl und ganz besonders bevorzugt für Wasserstoff steht; und
R² für eine die Reste R¹ und R verbindende Kohlenstoff-Kohlenstoff-Einfachbindung oder für eine verzweigte oder geradkettige, die Reste R¹ und R verbindende Gruppe steht, gewählt aus Alkylengruppen mit 1 bis 30, vorzugsweise 1 bis 20, besonders bevorzugt 1 bis 6 Kohlenstoffatomen, Arylresten mit 5 bis 12 Kohlenstoffatomen, wie beispielsweise einen Phenylen-Rest und Aralkylrest mit 6 bis 12 Kohlenstoffatomen. Vorzugsweise steht R² für eine die Reste R¹ und R verbindende Kohlenstoff-Kohlenstoff-Einfachbindung, eine Methylengruppe oder einen Phenylen-Rest.

Die Alkyl-, Aryl- oder Aralkyl-Reste bzw. -Gruppen sowie die polymeren Reste können substituiert sein. Typische Substituenten sind beispielsweise Halogenatome wie Fluor. Auch können die Reste Heteroatome wie O, S oder N enthalten.

In einer besonders bevorzugten Ausführungsform steht in obiger Formel (I) R¹ für Wasserstoff, R² für Methylen und R für OH oder einen polymeren Rest, gewählt aus der Gruppe bestehend aus einem Polyester-Rest, einem Polyether-Rest, einem Polyurethan-Rest, einem Polyester-Polyether-Rest, einem Polyurethan-Polyether-Rest oder einem Polyester-Polyurethan-Rest, wobei die polymeren Reste als terminale Gruppe eine Gruppe X-R³ tragen.

Steht R für einen der obengenannten polymeren Reste, so kann dieser so eingeführt werden, dass zunächst von Allylalkohol CH₂=CH-CH₂-OH (entsprechend R¹ = H, R² = Methylen und R = OH in obiger Formel (I)) als Startverbindung ausgegangen wird.

Ausgehend von Allylalkohol kann nach literaturbekannten Verfahren ein Alkylenoxid oder eine Mischung aus Alkylenoxiden, wie beispielsweise Ethylenoxid und Propylenoxid an die OH-Gruppe durch Addition angefügt werden, um als polymeren Rest einen Polyether-Rest zu erhalten. Hierbei entstehen Verbindungen der Formel (I), die beispielsweise durch folgende Formel (la) dargestellt werden können:

CH₂=CH-CH₂-O-[EO]ᵥ-[PO]_{w}-H (la)

worin
EO für einen Rest -CH₂-CH₂-O,
PO für einen Rest -CH₂-CH(CH₃)-O oder -CH(CH₃)-CH₂-O, und
v für eine ganze Zahl von 0 bis 200, vorzugsweise 1 bis 100, besonders bevorzugt 5 bis 100 und
w für eine ganze Zahl von 0 bis 200, vorzugsweise 1 bis 100, besonders bevorzugt 5 bis 100 steht, wobei
v + w mindestens 1 beträgt vorzugsweise 1 bis 300, besonders bevorzugt 5 bis 150 und ganz besonders bevorzugt 10 bis 100 beträgt.

Durch unterschiedliche Anteile an EO- und PO-Einheiten können die Eigenschaften des erfindungsgemäß herzustellenden modifizierten Organopolysiloxane beeinflusst werden. So kann speziell wegen der größeren Hydrophobie der [PO]-Einheiten im Vergleich zu den [EO]-Einheiten durch die Wahl geeigneter [EO]:[PO]-Verhältnisse die Hydrophobie der herzustellenden Organopolysiloxane gesteuert werden.

Die resultierende endständige OH-Gruppe kann beispielsweise wiederum mit einem Isocyanat zu einem Urethan, einer Carbonsäure oder deren Anhydrid, Halogenid oder Alkylester zu einem Ester oder mit Alkylhalogenid zu einem Ether umgesetzt werden.

Anstelle von linearen Polyether-Resten lassen sich durch Verwendung von Glycidol, Glycidolcarbonat oder einem Hydroxyoxetan auch verzweigte Strukturen erzeugen wie dies beispielsweise in DE 10 2008 032 064 A1, DE 10 2008 032 066 A1 und DE 10 2006 031 152 A1 beschrieben ist.

Bei den der oben angegebenen Strukturformel (Ia) entsprechenden Copolymeren kann es sich um statistische Copolymere, alternierende Copolymere oder um Blockcopolymere handeln. Auch kann durch die Abfolge der Alkylenoxideinheiten ein Gradient gebildet werden.

Ausgehend von Allylalkohol oder den zuvor beschriebenen OH-terminierten Allylpolyethern der Formel (la) können beispielsweise durch Ringöffnungspolymerisation von einem oder mehreren Lactonen wie beispielsweise Caprolacton oder Valerolacton Polyesterketten gebildet werden. Dies ist auch mit den zu den Lactonen korrespondierenden Hydroxycarbonsäuren möglich. Auch hier gilt, dass bei der Verwendung von mindestens zwei unterschiedlichen Lactonen, diese statistisch, alternierend, in Blöcken oder in gradientenartiger Abfolge eingebaut sein können. In einer weiteren besonderen Ausführungsform sind die Polyester-Reste Polycarbonat-Reste.

Zu Einführung von Polyurethan-Gruppen können beispielsweise zunächst Polyurethan-Präpolymere mit endständiger NCO-Gruppe hergestellt werden, die dann mit Allylalkohol umgesetzt werden.

Anstelle des obengenannten Allylalkohols können in allen Fällen auch andere Startverbindungen der Formel (I) eingesetzt werden in denen R für OH oder eine andere reaktive funktionelle Gruppe steht, die geeignet ist um die polymeren Reste einzuführen.

Typische als Verbindungen (A) im erfindungsgemäßen Verfahren einsetzbare Spezies sind die in DE 10 2008 032 064 A1, DE 10 2008 032 066 A1 und DE 10 2006 031 152 A1 genannten Allyl- und Methallylverbindungen.

Verbindungen (B) sind Si-H-funktionelle Verbindungen, insbesondere Hydrogensilane und Si-H-funktionelle Organopolysiloxane. Bei den Si-H-funktionellen Organopolysiloxanen kann es sich um Kettenpolymere, cyclische Polymere, verzweigte Polymere oder vernetzte Polymere handeln. Bevorzugt handelt es sich um Kettenpolymere oder verzweigte Polymere. Besonders bevorzugt handelt es sich um Kettenpolymere. Unter einem Organopolysiloxan werden hierin nicht nur langkettige Organopolysiloxane verstanden. Die kürzeste Organopolysiloxankette im Sinne dieser Erfindung ist ein Disiloxan.

Bevorzugt wird die Si-H-funktionelle Verbindung (B) ausgewählt aus Hydrogensilanen der allgemeinen Formel (II)

H-Si(R⁶)ₘ(R⁷)₃₋ₘ (II)

worin
R⁶ für einen verzweigten oder unverzweigten Alkylrest mit 1 bis 6 Kohlenstoffatomen, vorzugsweise 1 bis 4 Kohlenstoffatomen und besonders bevorzugt für einen Methyl, Ethyl oder Propylrest steht, und
R⁷ für eine verzweigte oder unverzweigte Alkoxygruppe mit 1 bis 6 Kohlenstoffatomen, vorzugsweise 1 bis 4 Kohlenstoffatomen und besonders bevorzugt für einen Methoxy, Ethoxy oder Propoxy-Rest steht oder R⁷ für einen O(CO)R⁶ oder ein Halogenatom, vorzugsweise Chlor steht, und m = 0 bis 3, vorzugsweise 0 bis 2, besonders bevorzugt 0 oder 1 ist;
und/oder
Si-H-funktionellen Organopolysiloxanen der allgemeinen Formel (III) 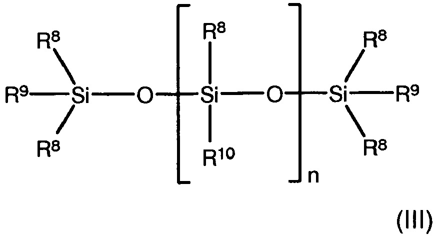 worin
alle Reste R⁸ jeweils unabhängig voneinander für geradkettige oder verzweigte Alkylreste mit 1 bis 30 Kohlenstoffatomen, vorzugsweise 1 bis 20 Kohlenstoffatomen, besonders bevorzugt 1 bis 6 Kohlenstoffatomen und ganz besonders bevorzugt 1 Kohlenstoffatom, Arylreste mit 5 bis 12 Kohlenstoffatomen, vorzugsweise 6 bis 10 und besonders bevorzugt 6 Kohlenstoffatomen oder Aralkylreste mit 6 bis 12, vorzugsweise 6 bis 10 und besonders bevorzugt 7 Kohlenstoffatomen stehen;
die Reste R⁹ und R¹⁰ unabhängig voneinander für R⁸ oder H stehen und mindestens einer der Reste R⁹ oder R¹⁰ für H steht; und
n = 0 bis 50000, vorzugsweise 0 bis 10000, besonders bevorzugt 0 bis 5000 und ganz besonders bevorzugt 0 bis 1000, wie 1 bis 500 oder 1 bis 200 ist.

Typische Beispiele für als Verbindung(en) (B) einsetzbare Si-H-funktionelle Silane sind Trichlorsilan, Methyldichlorsilan, Dimethylchlorsilan, Trimethoxysilan, Triethoxysilan, Methyldimethoxysilan oder Methyldiethoxysilan.

Typische Beispiele für als Verbindung(en) (B) einsetzbare Si-H-funktionelle Organopolysiloxane sind Polymethylhydrogensiloxane (R⁸ = Methyl, R⁹ und R¹⁰ = Methyl oder Wasserstoff, wobei mindestens einer der Reste R⁹ oder R¹⁰ für Wasserstoff steht und n = 0 bis 50000, vorzugsweise 0 bis 10000, besonders bevorzugt 0 bis 5000 und ganz besonders bevorzugt 0 bis 1000, wie 1 bis 500 oder 1 bis 200 beträgt).

Sollen mehrere verschiedene Verbindungen (A) mit einem Organopolysiloxan der allgemeinen Formel (III) zur Reaktion gebracht werden, so muss das Organopolysiloxan mindestens eine der Anzahl der verschiedenen Verbindungen (A) entsprechende Anzahl an Si-H-Funktionalitäten aufweisen.

Beim Einsatz verschiedener Verbindungen (A) und/oder (B) können die Verbindungen (A) vorvermischt einer Einlassöffnung der Reaktionsmischpumpe zu geführt werden oder über getrennte Einlassöffnungen. Gleiches gilt für die Verbindungen (B).

Enthält das Ausgangs-Organopolysiloxan der allgemeinen Formel (III) nur eine oder zwei endständige Si-H-Funktionalitäten (das heißt eine oder beide R⁹ sind H und alle R¹⁰ ≠ H), so erhält man bei der Umsetzung mit Verbindung(en) (A) sogenannte end-modifizierte Organopolysiloxane.

Enthält das Ausgangs-Organopolysiloxan der allgemeinen Formel (III) nur eine oder mehrere nicht-endständige Si-H-Funktionalitäten (das heißt beide R⁹ ≠ H und eines oder mehrere R¹⁰ = H), so erhält man bei der Umsetzung mit Verbindung(en) (A) Organopolysiloxane mit sogenannter Kammstruktur.

Enthält das Ausgangs-Organopolysiloxan der allgemeinen Formel (III) sowohl endständige als auch nicht-endständige Si-H-Funktionalitäten (das heißt eine oder beide R⁹ = H und mindestens ein R¹⁰ = H), so erhält man bei der Umsetzung mit Verbindung(en) (A) sogenannte end-modifizierte Organopolysiloxane mit Kammstruktur.

Die Umsetzung der Verbindung(en) (A) mit der oder den Verbindung(en) (B), kann in einem Lösungsmittelsystem, bevorzugt aber in Substanz nach den dem Fachmann bekannten Verfahren durchgeführt werden. Unter einer Reaktion "in Substanz" wird hierin eine solche verstanden, die ohne oder weitestgehend ohne Lösemittelzusatz erfolgt, wobei geringe Mengen Lösemittel (kleiner 5 Gew.-%, insbesondere kleiner 2 Gew.-% bezogen auf das Gewicht der Reaktionsmischung) - beispielsweise über den Katalysator in die Reaktionsmischung eingebracht - unberücksichtigt bleiben. Werden Lösemittel eingesetzt so dienen diese insbesondere zur Viskositätsanpassung. Die zu wählende Reaktionstemperatur hängt dabei auch von der Reaktivität der Edukte ab. Gegebenenfalls werden dem Fachmann bekannte Katalysatoren verwendet, um die Umsetzung zu beschleunigen. Typische Katalysatoren der Hydrosilylierungsreaktionen sind Katalysatoren auf Basis von Platin. Besonders geeignet erscheinen beispielsweise Speyers Katalysator oder Karstedts Katalysator (ein Katalysator aus H₂PtCl₆ 6 H₂O und Tetramethyldivinyldisiloxan). Verwendet werden können jedoch auch Komplexkatalysatoren von Pd, Rh, Ru, Cu, Ag, Au und Ir oder solche von anderen Übergangs- oder Edelmetallen oder entsprechende Multielementkatalysatoren. Die Katalysatoren werden üblicherweise in einer Menge von 0,1 bis 10000 ppm, vorzugsweise 1 bis 1000 ppm und besonders bevorzugt 10 bis 500 ppm eingesetzt. Vorteilhaft werden diese in der oder den Verbindung(en) (A) vor Eintritt in die Reaktionsmischpumpe gelöst oder dispergiert.

In einer Ausführungsform werden Verbindung(en) (A) und Verbindung(en) (B) in einem solchen Verhältnis der Reaktionsmischpumpe zugeführt, dass das Verhältnis von Kohlenstoff-Kohlenstoff-Mehrfachbindungen aus Verbindung(en) (A) zu Si-H-Funktionalität aus Verbindung(en) (B) im Wesentlichen äquimolar ist, d. h. 1:1,1 bis 1,1:1 beträgt.

In einer anderen Ausführungsform kann es vorteilhaft sein, Verbindung(en) (A) und Verbindung(en) (B) in einem solchen Verhältnis der Reaktionsmischpumpe zuzuführen, dass das Verhältnis von Kohlenstoff-Kohlenstoff-Mehrfachbindungen aus Verbindung(en) (A) zu Si-H-Funktionalität aus Verbindung(en) (B) so gewählt ist, dass die Si-H-Funktionalitäten in einem Überschuß, insbesondere einem Überschuß von mehr als 10 Mol-% vorliegen. Das Endprodukt enthält dann noch Si-H-Funktionen, die beispielsweise in einem nachgeschalteten Reaktor, insbesondere einer nachgeschalteten Reaktionsmischpumpe mit einer oder mehreren weiteren Verbindung(en) (A) umgesetzt werden, die sich von der oder den im ersten Schritt eingesetzten Verbindung(en) (A) unterscheiden. Auf diese Weise lassen sich auch mehr als zwei Reaktoren bzw. Reaktionsmischpumpen in Reihe betreiben.

Auch ist es möglich die Verbindungen (A) im Überschuß einzusetzen, das heißt Verbindung(en) (A) und Verbindung(en) (B) in einem solchen Verhältnis der Reaktionsmischpumpe zuzuführen, dass das Verhältnis von Kohlenstoff-Kohlenstoff-Mehrfachbindungen aus Verbindung(en) (A) zu Si-H-Funktionalität aus Verbindung(en) (B) so gewählt ist, dass die Kohlenstoff-Kohlenstoff-Mehrfachbindungen im Überschuß, insbesondere einem Überschuß von mehr als 10 Mol-% vorliegen.

Üblicherweise werden 10-100 Mol-%, bevorzugt 20-50 Mol-% der durch die Zufuhr der Verbindung(en) (B) in den Reaktor eingeführten Si-H-Funktionen in der Reaktionsmischpumpe umgesetzt.

In einer bevorzugten Ausführungsform der Erfindung beträgt die Temperatur des Reaktionsgemischs im Reaktor 0-200 °C, bevorzugt 10-200 °C sowie besonders bevorzugt 50-130°C.

Der Quotient aus Gesamtvolumen des in dem Reaktor enthaltenen Reaktionsgemischs und dem Gesamtvolumenstrom des in Form des Produktstroms aus dem Reaktor ausgeleiteten Reaktionsgemischs ist als ein Maß für die Verweilzeit anzusehen. Die relevanten verhältnismäßig kurzen Verweilzeiten gewährleisten, dass trotz der relativ hohen Temperaturen sich in einem nur geringen Maße unerwünschte Nebenreaktionen bemerkbar machen.

Die Verbindung(en) (A) sowie die Verbindung(en) (B) werden jeweils normalerweise mit einer Eintrittstemperatur von 0-200 °C, bevorzugt 10-150 °C, besonders bevorzugt 20-100 °C dem Reaktor zugeführt. Die Differenz zwischen der Austrittstemperatur (beim Austritt aus dem Reaktor) des Reaktionsgemischs und dieser Eintrittstemperatur beträgt meist 0-200 °C, bevorzugt 10-150 °C. Typischerweise beträgt die Heizleistung bezogen auf die im Reaktor dem Reaktionsgemisch von außen zugeführten Wärme 1 bis 2000 Watt pro kg, bevorzugt ungefähr 100 bis 500 Watt pro kg.

Die vorliegende Erfindung betrifft auch die Additionsverbindungen, welche mit dem vorstehend beschriebenen Verfahren herstellbar sind.

Wie bereits vorstehend beschrieben, zeichnen sich diese Additionsverbindungen durch eine besonders einheitliche und hohe Qualität aus (enge Molekulargewichtsverteilung sowie relativ geringe Anteil von Nebenprodukten).

Die vorliegende Erfindung betrifft auch die Verwendung der nach dem, vorstehend beschriebenen erfindungsgemäßen Verfahren hergestellten modifizierten Silizium-Verbindungen, insbesondere der modifizierten Silane und Organopolysiloxane als Additive, beispielsweise als Mittel zur Verbesserung der Kratzfestigkeit, als Gleitmittel, Entschäumer oder Schaumstabilisatoren, Verlaufmittel, oberflächenaktive, wasserabweisende oder schmutzabweisende Mittel wie beispielsweise Antigraffiti-Mittel, Trennmittel oder Benetzungsmittel. Sie können beispielsweise aber auch zur Modifizierung von Polymeren beziehungsweise Harzen oder zur Behandlung von Pigmenten oder Füllstoffen verwendet werden.

Insbesondere beim Einsatz als Additiv in hochwertigen Beschichtungssystemen zeichnen sich die hochwertigen nach dem erfindungsgemäßen Verfahren erhaltenen Produkte durch eine breite Verträglichkeit aus und verringern die Neigung der Beschichtungen zu Oberflächenfehlern wie beispielsweise dem Auftreten von Kratern, Nadelstichen oder Orangenschalen-Effekten.

Gerade beim Einsatz als Verlauf- und Filmbildehilfsmittel in Automobilserien- oder Automobilreparaturlacken spielen die erfindungsgemäß hergestellten modifizierten Organopolysiloxane eine bedeutende Rolle. In derart qualitativ hochwertigen Systemen sollten möglichst reine Verbindungen eingesetzt werden, die auch ein Minimum an Eigenverfärbung zeigen. Dies gilt insbesondere für nicht-pigmentierte Klarlacke. Da die erfindungsgemäß erhaltenen Verbindungen unter Einsatz einer minimalen Menge an Katalysator auskommen kann diese Voraussetzung erfüllt werden.

In einer besonderen Ausführungsform besitzen die Reaktionsprodukte aus Verbindung(en) (A) und Verbindung(en) (B) Viskositäten von <1000 mPas, vorzugsweise <500 mPas und besonders bevorzugt <350 mPas und eignen sich als Verlaufadditive.

In einer anderen bevorzugten Ausführungsform besitzen die Reaktionsprodukte aus Verbindung(en) (A) und Verbindung(en) (B) Viskositäten von >1000 mPas, vorzugsweise >3000 mPas und besonders bevorzugt >5000 mPas und eignen sich als Entschäumer.

Seine Vorteile kann das erfindungsgemäße Verfahren jedoch dort besonders zeigen, wo hochviskose Edukte eingesetzt werden und/oder hochviskose Produkte erhalten werden sollen. Ohne oder mit nur minimaler Verdünnung durch Lösemittel können die Edukte eingesetzt werden und im Verfahren homogen und in kurzer Reaktionszeit zur Reaktion gebracht werden. Somit lassen sich nach diesem Verfahren beispielsweise besonders gut Additive zur Erzeugung eines Hammerschlageffekts (dieser zeichnet sich durch gleichmäßige Kraterbildung aus) bei Lacken erhalten, da die Additive für solche Anwendungen vorzugsweise eine Viskosität >10 Pas, besonders bevorzugt >50 Pas und ganz besonders bevorzugt >100 Pas besitzen oder von Verbindungen der Formel (II) ausgehen bei welchen n > 1000, vorzugsweise > 1500 beträgt. Beim Einsatz von anderen Mikroreaktionsverfahren oder gar Batch-Verfahren sind die Viskositäten zu hoch um einheitliche, qualitativ hochwertige Produkte zu erhalten.

Über die Addition der Verbindung(en) (A) an die Verbindung(en) (B) werden modifizierende Gruppen in die Organopolysiloxane eingeführt, so dass modifizierte Organopolysiloxane resultieren. Durch die Modifizierung mit den Verbindungen (A) können die Eigenschaften der Organopolysiloxane optimiert und passend für den Anwendungszweck und das Anwendungsmedium abgestimmt werden.

Handelt es sich bei den Resten R in Formel (I) der Verbindungen (A) um reaktive Gruppen, wie beispielsweise Isocyanat-, Hydroxy-, Amino-, Carboxy-, Epoxy-, Silyl- oder Acrylatgruppen, so lassen sich die modifizierten Polyorganosiloxane beispielsweise mit komplementären reaktiven Gruppen der Bestandteile der Beschichtungsmittelzusammensetzungen oder der thermoplastischen oder duroplastischen Formkörper umsetzen und somit kovalent oder ionisch in das Beschichtungsmittelsystem einbauen. Hierbei sind beispielsweise Reaktionen mit Bindemitteln, aber auch Feststoffen, wie Pigmenten und Füllstoffen möglich.

Enthalten die Reste R in Formel (la) der Verbindungen (A) hauptsächlich EO-Gruppen, so besteht zumeist eine gute Verträglichkeit mit Bindemitteln in Beschichtungsmittelsystemen. Allerdings neigen derartige Additive auch zur Schaumstabilisierung, die jedoch durch Einbau unpolarerer PO-Einheiten zurückgedrängt werden kann.

Der Einbau von Aryl- oder Alkylsubstituenten über die Reste R in Formel (I) ermöglicht wiederum eine weitere Herabsetzung der Schaumneigung, sie sind auch häufig thermostabiler als polyethermodifizierte Verbindungen der Formel (la).

Wird ein verbesserter "Slip" eines ausgehärteten Films oder eine erhöhte Festigkeit gegenüber Kratzern, Metallmarkierungen und Schmutz erwartet, so werden üblicherweise langkettige Si-H-funktionelle Polysiloxane im erfindungsgemäßen Verfahren eingesetzt mit n > 1000, insbesondere > 5000.

Kurzkettige modifizierte Organopolysiloxane mit beispielsweise n = 1 bis 6, die mit Verbindungen der Formel (la) modifiziert sind werden üblicherweise auch Silikontenside bezeichnet und kommen vorwiegend in wässrigen Systemen zum Einsatz. Besonders bevorzugt unter den Silikontensiden sind solche die von Mono-Si-H-funktionellen Verbindungen (B) der Formel (III) ableitbar sind.

Neben dem Einsatz als Additiv in wässrigen und/oder lösemittelhaltigen Dispersionen, insbesondere Beschichtungsmitteln wie Lacken, ist es ebenfalls möglich, pulver- oder faserförmige Feststoffe, wie Pigmente oder Füllstoffe mit den nach dem erfindungsgemäßen Verfahren erhaltenen Produkten zu beschichten.

Somit betrifft die vorliegende Erfindung schließlich auch pulver- oder faserförmige Feststoffe, die mit den nach dem erfindungsgemäßen Verfahren erhaltenen Produkten beschichtet sind.

Derartige Beschichtungen von organischen und anorganischen Feststoffen werden in bekannter Art und Weise durchgeführt. Beispielsweise sind in der EP-A 0 270 126 solche Verfahren beschrieben. Speziell bei Pigmenten kann eine Beschichtung der Pigmentoberfläche während oder nach der Synthese der Pigmente erfolgen, beispielsweise durch Zusatz der erfindungsgemäß erhaltenen Produkte zur Pigmentsuspension. Auf diese Weise vorbehandelte Pigmente zeigen eine leichte Einarbeitbarkeit in das Bindemittelsystem, ein verbessertes Viskositäts- und Flockulationsverhalten sowie einen guten Glanz gegenüber nicht behandelten Pigmenten.

Die nach dem erfindungsgemäßen Verfahren erhaltenen Produkte werden in weiten Bereichen variablen Mengen bezogen auf den zu dispergierenden Feststoff eingesetzt. Die eingesetzte Menge ist im Wesentlichen abhängig von Größe und Art der Oberfläche des Feststoffs. Beispielsweise benötigt Ruß wesentlich größere Mengen derartiger Additive als Titandioxid. In der EP-A 0 270 126 finden sich Beispiele für Pigmente und Füllstoffe. Weitere Beispiele basieren auf Neuentwicklungen insbesondere im Bereich der organischen Pigmente wie in der Klasse der Diketo-pyrrolo-pyrrole. Auch magnetische Pigmente auf Basis von Reineisen oder Mischoxiden können mit Hilfe der nach dem erfindungsgemäßen Verfahren erhaltenen Produkte in Dispersionen eingebracht werden. Des Weiteren lassen sich auch mineralische Füllstoffe wie Calciumcarbonat und Calciumoxid oder Flammschutzmittel wie Aluminium- oder Magnesiumhydroxid dispergieren. Zudem werden auch Mattierungsmittel wie Kieselsäuren dispergiert und stabilisiert.

Im Folgenden soll die Erfindung anhand von Ausführungsbeispielen näher beschrieben werden.

### BEISPIELE

### Beispiel 1 (erfindungsgemäß):

### Reaktion eines Polymethylwasserstoffsiloxans (Baysilon MH 15 = Me₃Si-[O-SiH(Me)]ₙ-O-SiMe₃; Vikosität (20 °C) = 15 mPas) mit 1-Octen (Herstellung eines Polymers mit Kammstruktur)

Die angegebenen Viskositäten wurden im Bereich von 0 bis 800 mPas bei 20°C mit einem Haake VT550 Rotationsviskosimeter mit dem zugehörigen "NV"-System durchgeführt.

Zunächst wurde eine Reaktionsmischpumpe des Typs HMR-40 (K-Engineering, Westoverledingen, Deutschland) und ein Thermostat des Typs Huber K25-CC-NR für die Nachreaktion auf eine Arbeitstemperatur von 85 °C gebracht.

Nachdem die Arbeitstemperaturen erreicht waren, wurden die Massenströme aus den Vorratsgefäßen 1 und 2 (1-Octen: 11,9 g/min; Baysilon MH 15: 6,3 g/min) mittels Pumpen 1 und 2 in die Reaktionskammer der Reaktionsmischpumpe kontinuierlich gefördert. Der eingesetzte Platinkatalysator (Pt-Divinyltetramethyldisiloxan) wurde vorher im 1-Octen gelöst. Die Menge an Platinkatalysator betrug 0,002 Gew.-%.

Die Reaktionsmischpumpe wurde über einen Frequenzumrichter mir 60 % der maximal möglichen Umdrehungszahl betrieben. Während der Reaktion (kontinuierlich über 5 Stunden) wurde im Reaktionsraum der Reaktionsmischpumpe eine Temperatur von 79-89 °C gemessen. Zur Nachreaktion wurde das Reaktionsgemisch über einen geeigneten Schlauch aus Polytetrafluorethylen durch ein beheiztes Bad des Thermostaten geleitet.

Der verwendete Schlauch zur Nachreaktion besaß einen Innendurchmesser von 6 mm und eine Länge von 10 m. Das Gesamtsystemvolumen (Reaktionsmischpumpe und nachgeschalteter Schlauch) betrug ca. 288 ml. Die Gesamtreaktionszeit (Verweilzeit in Pumpe und Schlauch) betrug ca. 12,5 min.

Man erhält ein bei Raumtemperatur leicht viskoses, leicht gelbliches Produkt mit folgenden analytischen Daten: gewichtsmittleres Molekulargewicht (bestimmt mittels GPC nach DIN 55672 Teil 1 jedoch mit Styragelsäulen der Firma Waters; Elutionsmittel:-Toluol ; Polydimethylsiloxanstandard): ca. 10000 g/mol;Iodzahl:7,5.

### Beispiel 2 (erfindungsgemäß):

### Reaktion von Alpol 2000 (CH₂=CH-CH₂-O[EO]ₓ[PO]_{y}-Me; Viskosität (20 °C) = 400 mPas mit Me₃Si-[O-SiH(Me)ₙ-[O-SiMe₂]ₘ-O-SiMe₃

Zunächst wurde eine Reaktionsmischpumpe des Typs HMR-40 (K-Engineering, Westoverledingen, Deutschland) und ein Thermostat des Typs Huber K25-CC-NR für die Nachreaktion auf eine Arbeitstemperatur von 100 °C gebracht.

Nachdem die Arbeitstemperaturen erreicht waren, wurden die Massenströme aus den Vorratsgefäßen 1 und 2 (Alpol 2000: 7,7 g/min; Me₃Si-[O-SiH(Me)]ₙ-[O-SiMe₂]ₘ-O-SiMe₃: 2,3 g/min) mittels Pumpen 1 und 2 in die Reaktionskammer der Reaktionsmischpumpe kontinuierlich gefördert. Der eingesetzte Platinkatalysator (Pt-Divinyltetramethyldisiloxan) wurde vorher im Alpol 2000 gelöst. Die Menge an Platinkatalysator betrug 0,01 Gew.-%.

Die Reaktionsmischpumpe wurde über einen Frequenzumrichter mir 100 % der maximal möglichen Umdrehungszahl betrieben. Während der Reaktion (kontinuierlich über 5 Stunden) wurde im Reaktionsraum der Reaktionsmischpumpe eine Temperatur von 98-105 °C gemessen. Zur Nachreaktion wurde das Reaktionsgemisch über einen geeigneten Schlauch aus Polytetrafluorethylen durch ein beheiztes Bad des Thermostaten geleitet.

Der verwendete Schlauch zur Nachreaktion besaß einen Innendurchmesser von 6 mm und eine Länge von 5 m. Das Gesamtsystemvolumen betrug ca. 146 ml. Die Gesamtreaktionszeit betrug ca. 15 min.

Man erhält ein bei Raumtemperatur leicht bräunliches, mittelviskoses Produkt mit folgenden analytischen Daten: gewichtsmittleres Molekulargewicht (bestimmt mittels GPC nach DIN 55672 Teil 1 jedoch mit Styragelsäulen der Firma Waters; Elutionsmittel: Toluol; Polydimethylsiloxanstandard): ca. 14050 g/mol; SiH-Umsatz bestimmt mittels IR-Spektrometrie betrug 100 %.

Es konnte hiermit gezeigt werden, dass selbst beim Einsatz hochviskoser Edukte, wie beispielsweise Alpol 2000 bei hoher Raumzeitausbeute, qualitativ sehr hochwertige Produkte erhalten werden.

## Patentansprüche

1. Verfahren zur kontinuierlichen Herstellung von Silanen und/oder Organopolysiloxanen durch Hydrosilylierung, bei welchem mindestens eine Verbindung (A), die mindestens eine Kohlenstoff-Kohlenstoff-Mehrfachbindung enthält mit mindestens einer Verbindung (B), die mindestens eine Si-H-Funktionalität aufweist zur Reaktion gebracht wird, **dadurch gekennzeichnet, dass** die Reaktion in einer Reaktionsmischpumpe erfolgt.

2. Verfahren nach Anspruch 1 , **dadurch gekennzeichnet, dass** die Reaktionsmischpumpe vom Peripheralradpumpen-Typ ist und ausgestattet ist mit
(a) einer rotationssymmetrischen Mischkammer aus einer Umfangswand und zwei Stirnseiten, die strömungstechnisch miteinander verbundene ringförmige Kanäle aufweisen,
(b) mindestens einer Einlassöffnung zur Mischkammer, worüber die Verbindung(en) (A) zugeführt werden,
(c) mindestens einer Einlassöffnung zur Mischkammer, worüber Verbindung(en) (B) zugeführt werden,
(d) einem magnetgekuppelt angetriebenen Mischrotor in der Mischkammer, der stirnseitig symmetrisch angeordnete Kantenbrüche aufweist, die mit den ringförmigen Kanälen an den Stirnseiten der Mischkammer Druckzellen bilden und wobei die Druckzellen über Durchgangsbohrungen im Mischrotor miteinander verbunden sind, und
(e) einer Auslassöffnung der Mischkammer, worüber das Reaktionsgemisch und/oder das Produkt aus der Reaktionsmischpumpe ausgetragen werden
(f) einem durch ein externes Heiz- beziehungsweise Kühlaggregat temperierbaren Temperierkreislauf.

3. Verfahren nach Anspruch 2, wobei die Reaktionsmischpumpe des weiteren (g) mit einer Einlassöffnung für Spülflüssigkeiten versehen ist.

4. Verfahren nach einem der Ansprüche 1 bis 3, **dadurch gekennzeichnet, dass** die Verbindung(en) (A), mindestens eine terminale C=C-Doppelbindung oder C=C-Dreifachbindung trägt.

5. Verfahren nach Anspruch 4, wobei die C=C-Doppelbindung Bestandteil einer Vinyl-, Allyl- oder (Meth)acryl-Gruppe ist.

6. Verfahren nach Anspruch 4 oder 5, wobei die Verbindung(en) (A) solche der allgemeinen Formel (I) sind:
CH₂=CR¹-R²-R (I)
worin
der Rest R für einen geradkettigen oder verzweigten Alkylrest mit 1 bis 30 Kohlenstoffatomen, einen Arylrest mit 5 bis 12 Kohlenstoffatomen, einen Aralkylrest mit 6 bis 12 Kohlenstoffatomen, Halogen, Epoxy, eine NCO-, Carboxyl- oder Silyl-Gruppe oder für eine Gruppe X-R³ steht, worin X für O, S oder NR⁴ steht, worin R⁴ für Wasserstoff oder einen geradkettigen oder verzweigten Alkylrest mit 1 bis 30 Kohlenstoffatomen steht und R³ für Wasserstoff, einen geradkettigen oder verzweigten Alkylrest mit 1 bis 30 Kohlenstoffatomen, einen Arylrest mit 5 bis 12 Kohlenstoffatomen, einen Aralkylrest mit 6 bis 12 Kohlenstoffatomen oder einen Rest CO-R⁵, worin R⁵ für einen verzweigten oder unverzweigten Alkyl- oder Alkenyl-Rest mit 1 bis 30 Kohlenstoffatomen steht oder
der Rest R für einen polymeren Rest steht, gewählt aus der Gruppe bestehend aus einem Polyester-Rest, einem Polyether-Rest, einem Polyurethan-Rest, einem Polyester-Polyether-Rest, einem Polyurethan-Polyether-Rest oder einem Polyester-Polyurethan-Rest, steht, wobei die polymeren Reste als terminale Gruppe eine Gruppe X-R³ tragen;
der Rest R¹ für Wasserstoff oder eine geradkettige oder verzweigte Alkylgruppe mit 1 bis 4 Kohlenstoffatomen steht; und
R² für eine die Reste R¹ und R verbindende Kohlenstoff-Kohlenstoff-Einfachbindung oder für eine verzweigte oder geradkettige, die Reste R¹ und R verbindende Gruppe steht, gewählt aus Alkylengruppen mit 1 bis 30 Kohlenstoffatomen, Arylresten mit 5 bis 12 Kohlenstoffatomen und Aralkylresten mit 6 bis 12 Kohlenstoffatomen.

7. Verfahren nach einem der Ansprüche 1 bis 6, **dadurch gekennzeichnet, dass** die Verbindung(en) (B) gewählt sind aus Si-H-funktionellen Silanen oder Si-H-funktionellen Organopolysiloxanen.

8. Verfahren nach Anspruch 7, wobei das Si-H-funktionelle Silan die allgemeine Formel (II) besitzt:
H-Si(R⁶)ₘ(R⁷)₃₋ₘ (II)
worin
R⁶ für einen verzweigten oder unverzweigten Alkylrest mit 1 bis 6 Kohlenstoffatomen steht, und
R⁷ für eine verzweigte oder unverzweigte Alkoxygruppe mit 1 bis 6 Kohlenstoffatomen steht oder R⁷ für einen Rest O(CO)R⁶ oder ein
Halogenatom steht, und
m = 0 bis 3 ist.

9. Verfahren nach Anspruch 7, wobei das Si-H-funktionelle Organopolysiloxan die allgemeine Formel (III) besitzt: 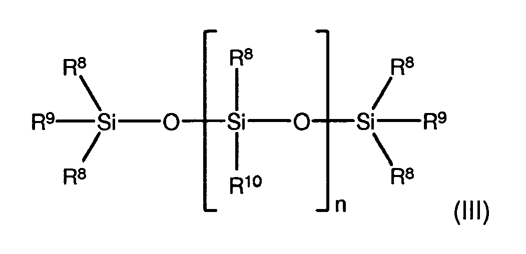 worin
alle Reste R⁸ jeweils unabhängig voneinander für geradkettige oder verzweigte Alkylreste mit 1 bis 30 Kohlenstoffatomen, Arylreste mit 5 bis 12 Kohlenstoffatomen oder Aralkylreste mit 6 bis 12 stehen;
die Reste R⁹ und R¹⁰ unabhängig voneinander für R⁸ oder H stehen und mindestens einer der Reste R⁹ oder R¹⁰ für H steht; und
n = 0 bis 50000 ist.

## Claims

1. A process for continuously preparing silanes and/or organopolysiloxanes by hydrosilylation, in which at least one compound (A) containing at least one carbon-carbon multiple bond is reacted with at least one compound (B) having at least one Si-H functionality, **characterized in that** the reaction is effected in a reaction mixing pump.

2. The process as claimed in claim 1, **characterized in that** the reaction mixing pump is of the peripheral wheel pump type and is equipped with
(a) a rotationally symmetric mixing chamber composed of a peripheral wall and two ends having annular channels connected to one another for flow purposes,
(b) at least one inlet orifice to the mixing chamber, through which the compound(s) (A) is/are supplied,
(c) at least one inlet orifice to the mixing chamber, through which compound(s) (B) is/are supplied,
(d) a mixing rotor driven by magnetic coupling in the mixing chamber, which has chamfers arranged symmetrically at the ends, these forming pressure cells with the annular channels at the ends of the mixing chamber, and the pressure cells being connected to one another via passage bores in the mixing rotor, and
(e) an outlet orifice from the mixing chamber, through which the reaction mixture and/or the product is/are discharged from the reaction mixing pump,
(f) a temperature control circuit which can be controlled by an external heating or cooling unit.

3. The process as claimed in claim 2, wherein the reaction mixing pump has additionally been provided with (g) an inlet orifice for purge liquids.

4. The process as claimed in any of claims 1 to 3, **characterized in that** the compound(s) (A) bear(s) at least one terminal C=C double bond or C≡C triple bond.

5. The process as claimed in claim 4, wherein the C=C double bond is part of a vinyl, allyl or (meth)acryloyl group.

6. The process as claimed in claim 4 or 5, wherein the compound(s) (A) are those of the general formula (I):
CH₂=CR¹-R²-R (I)
in which
the R radial is a straight-chain or branched alkyl radical having 1 to 30 carbon atoms, an aryl radical having 5 to 12 carbon atoms, an aralkyl radical having 6 to 12 carbon atoms, halogen, epoxy, an NCO-, carboxyl or silyl group, or is an X-R³ group in which X is O, S or NR⁴ in which R⁴ is hydrogen or a straight-chain or branched alkyl radical having 1 to 30 carbon atoms and R³ is hydrogen, a straight-chain or branched alkyl radical having 1 to 30 carbon atoms, an aryl radical having 5 to 12 carbon atoms, an aralkyl radical having 6 to 12 carbon atoms, or a CO-R⁵ radical in which R⁵ is a branched or unbranched alkyl or alkenyl radical having 1 to 30 carbon atoms or
the R radical is a polymeric radical selected from the group consisting of a polyester radical, a polyether radical, a polyurethane radical, a polyester-polyether radical, a polyurethane-polyether radical and a polyester-polyurethane radical, where the polymeric radicals bear an X-R³ group as the terminal group;
the R¹ radical is hydrogen or a straight-chain or branched alkyl group having 1 to 4 carbon atoms; and
R² is a carbon-carbon single bond connecting the R¹ and R radicals or is a branched or straight-chain group connecting the R¹ and R radicals, selected from alkylene groups having 1 to 30 carbon atoms, aryl radicals having 5 to 12 carbon atoms and aralkyl radicals having 6 to 12 carbon atoms.

7. The process as claimed in any of claims 1 to 6, **characterized in that** the compounds (B) is/are selected from Si-H-functional silanes and Si-H-functional organopolysiloxanes.

8. The process as claimed in claim 7, wherein the Si-H-functional silane has the general formula (II):
H-Si(R⁶)ₘ(R⁷)₃₋ₘ (II)
in which
R⁶ is a branched or unbranched alkyl radical having 1 to 6 carbon atoms, and
R⁷ is a branched or unbranched alkoxy group having 1 to 6 carbon atoms or R⁷ is an O(CO)R⁶ radical or a halogen atom, and
m = 0 to 3.

9. The process as claimed in claim 7, wherein the Si-H-functional organopolysiloxane has the general formula (III): 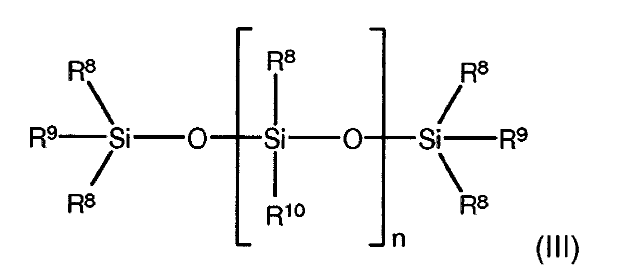 in which
all R⁸ radicals are each independently straight-chain or branched alkyl radicals having 1 to 30 carbon atoms, aryl radicals having 5 to 12 carbon atoms or aralkyl radicals having 6 to 12;
the R⁹ and R¹⁰ radicals are each independently R⁸ or H, and at least one of the R⁹ and R¹⁰ radicals is H; and
n = 0 to 50 000.

## Revendications

1. Procédé de fabrication continue de silanes et/ou d'organopolysiloxanes par hydrosilylation, dans lequel au moins un composé (A) comportant au moins une liaison multiple carbone-carbone est réagi avec au moins un composé (B) présentant au moins une fonctionnalité Si-H, **caractérisé en ce que** la réaction est effectuée dans une pompe de mélange de réaction.

2. Procédé selon la revendication 1, **caractérisé en ce que** la pompe de mélange de réaction est du type pompes périphériques et est équipée
(a) d'une chambre de mélange à symétrie de révolution constituée d'une paroi circonférentielle et de deux faces d'extrémité, lesquelles présentent des canaux annulaires fluidiquement reliés l'un à l'autre,
(b) d'au moins un orifice d'admission à la chambre de mélange, par lequel sont alimentés le ou les composés (A),
(c) d'au moins un orifice d'admission à la chambre de mélange, par lequel sont alimentés le ou les composés (B),
(d) d'un rotor de mélange à entraînement magnétique dans la chambre de mélange qui présente des chanfreins disposés symétriquement de manière frontale, lesquels forment des chambres de compression avec les canaux annulaires sur les faces d'extrémité de la chambre de mélange, et les chambres de compression étant reliées au niveau du rotor de mélange via des alésages traversants, et
(e) d'un orifice de sortie de la chambre de mélange, par lequel le mélange de réaction et/ou le produit issu de la pompe de mélange de réaction sont évacués
(f) d'un circuit de thermostatisation thermostatisable par un groupe de chauffage ou de refroidissement externe.

3. Procédé selon la revendication 2, la pompe de mélange de réaction étant en outre (g) pourvue d'un orifice d'admission pour liquides de rinçage.

4. Procédé selon l'une des revendications 1 à 3, **caractérisé en ce que** le ou les composés (A) sont porteurs d'au moins une double liaison C=C ou triple liaison C≡C terminale.

5. Procédé selon la revendication 4, la double liaison C=C faisant partie d'un groupe vinyle, allyle ou (méth)acryle.

6. Procédé selon la revendication 4 ou 5, le ou les composés (A) étant de formule générale (I) :
CH₂=CR¹-R²-R (I)
où
le groupe fonctionnel R représente un groupe fonctionnel alkyle linéaire ou ramifié ayant 1 à 30 atomes de carbone, un groupe fonctionnel aryle ayant 5 à 12 atomes de carbone, un groupe fonctionnel aralkyle ayant 6 à 12 atomes de carbone, halogène, époxy, un groupe NCO, carboxyle ou silyle ou un groupe X-R³, où X représente O, S ou NR⁴, où R⁴ représente de l'hydrogène ou un groupe fonctionnel alkyle linéaire ou ramifié ayant 1 à 30 atomes de carbone et R³ représente de l'hydrogène, un groupe fonctionnel alkyle linéaire ou ramifié ayant 1 à 30 atomes de carbone, un groupe fonctionnel aryle ayant 5 à 12 atomes de carbone, un groupe fonctionnel aralkyle ayant 6 à 12 atomes de carbone ou un groupe fonctionnel CO-R⁵, où R⁵ représente un groupe fonctionnel alkyle ou alcényle ramifié ou non ramifié ayant 1 à 30 atomes de carbone ou
le groupe fonctionnel R représente un groupe fonctionnel polymère, sélectionné dans le groupe constitué d'un groupe fonctionnel polyester, d'un groupe fonctionnel polyéther, d'un groupe fonctionnel polyuréthane, d'un groupe fonctionnel polyester-polyéther, d'un groupe fonctionnel polyuréthane-polyéther ou d'un groupe fonctionnel polyester-polyuréthane, les groupes fonctionnels polymères étant porteurs d'un groupe X-R³ en tant que groupe terminal ;
le groupe fonctionnel R¹ représente de l'hydrogène ou un groupe alkyle linéaire ou ramifié ayant 1 à 4 atomes de carbone ; et
R² représente une liaison simple carbone-carbone reliant les groupes fonctionnels R¹ et R ou un groupe linéaire ou ramifié reliant les groupes fonctionnels R¹ et R, sélectionné parmi des groupes alkylène ayant 1 à 30 atomes de carbone, des groupes fonctionnels aryle ayant 5 à 12 atomes de carbone et des groupes fonctionnels aralkyle ayant 6 à 12 atomes de carbone.

7. Procédé selon l'une des revendications 1 à 6, **caractérisé en ce que** la ou les composés (B) sont sélectionnés parmi des silanes fonctionnels Si-H ou des organopolysiloxanes fonctionnels Si-H.

8. Procédé selon la revendication 7, le silane fonctionnel Si-H possédant la formule générale (II) :
H-Si(R⁶)ₘ(R⁷)₃₋ₘ (II)
où
R⁶ représente un groupe fonctionnel alkyle ramifié ou non ramifié ayant 1 à 6 atomes de carbone, et
R⁷ représente un groupe alcoxy ramifié ou non ramifié ayant 1 à 6 atomes de carbone ou R⁷ représente un groupe fonctionnel O(CO)R⁶ ou un atome d'halogène, et
m = 0 à 3.

9. Procédé selon la revendication 7, l'organopolysiloxane fonctionnel Si-H possédant la formule générale (III) : 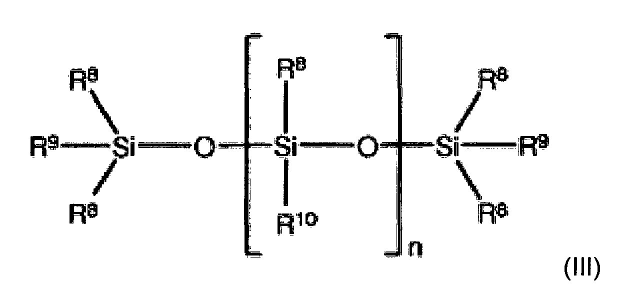 où tous les groupes fonctionnels R⁸ représentent, indépendamment les uns des autres, des groupes fonctionnels alkyle linéaires ou ramifiés ayant 1 à 30 atomes de carbone, des groupes fonctionnels aryle ayant 5 à 12 atomes de carbone ou des groupes fonctionnels aralkyle ayant 6 à 12 atomes de carbone ;
les groupes fonctionnels R⁹ et R¹⁰ représentent, indépendamment les uns des autres, R⁸ ou H, et au moins l'un des groupes fonctionnels R⁹ ou R¹⁰ représente H ; et
n = 0 à 50 000.
